# EUROPÄISCHE PATENTSCHRIFT

(11) **EP 2 455 261 B1**
(45) Veröffentlichungstag und Bekanntmachung des Hinweises auf die Patenterteilung: **04.06.2014**
(21) Anmeldenummer: 11009052.9
(22) Anmeldetag: 15.11.2011
(51) Int. Cl.: B60R 22/26, B60N 2/68

(54) **Vorrichtung zur Anbringung eines Sicherheitsgurtes sowie Sitzanordnung**
Device for applying a safety belt and seat assembly
Dispositif d'application d'une ceinture de sécurité et agencement de siège

(30) Priorität: 17.11.2010 DE 202010015484 U
(43) Veröffentlichungstag der Anmeldung: 23.05.2012
(73) Patentinhaber: AGUTI PRODUKTENTWICKLUNG & DESIGN GMBH, 88085 Langenargen (DE)
(72) Erfinder: Grieger, Michael, 88079 Kressbronn (DE)
(74) Vertreter: Otten, Roth, Dobler & Partner

(56) Entgegenhaltungen:
- DE-A1- 19 544 014
- DE-U1- 29 704 735
- DE-U1-202006 013 033
- DE-U1-202010 008 379

## Beschreibung

Die Erfindung betrifft eine Vorrichtung zur Anbringung eines Sicherheitsgurtes nach dem Oberbegriff des Anspruchs 1 sowie eine Sitzanordnung mit einer Sitzbank und einer Vorrichtung zur Anbringung eines Sicherheitsgurtes.

### Stand der Technik:

In Fahrzeugen, insbesondere im Wohnraum von Wohnmobilen gibt es Gestelle, die dafür ausgestaltet sind, Sicherheitsgurte anzubringen. Derartige Gestelle, die z. B. an einem Fahrzeugboden verankerbar sind, werden regelmäßig als Rohrrahmen ausgeführt.

Damit lassen sich im Wohnbereich eines Wohnmobils auf einer Sitzbank z. B. zwei Sitzplätze mit Gurten ausstatten.

Ein Anliegen in Wohnmobilen ist stets das zur Verfügung stellen von ausreichend "Fahrt-Sitzplätzen" vor dem Hintergrund, dass längs in Fahrtrichtung angeordnete Sitzplätze, insbesondere Sitzbänke, bei welchen Personen quer zur Fahrtrichtung sitzen, aus gesetzlichen Bestimmungen keine zugelassenen Sitzplätze während der Fahrt darstellen können.

### Aufgabe und Vorteile der Erfindung:

Der Erfindung liegt die Aufgabe zugrunde, insbesondere in Wohnmobilen, die Sitzplatzzahl während der Fahrt erhöhen zu können.

Diese Aufgabe wird durch die Merkmale des Anspruchs 1 gelöst.

In den abhängigen Ansprüchen sind vorteilhafte und zweckmäßige Weiterbildung der Erfindung angegeben.

Die Erfindung geht von einer Vorrichtung zur Anbringung eines Sicherheitsgurtes in einem Fahrzeug, insbesondere Wohnmobil aus, die eine Montageeinheit umfasst, die dazu ausgebildet ist, dass sich daran ein Gurtschloss und eine Gurtrolle montieren lässt, vgl. DE 195 44 014 A1.

Der Kern der Erfindung liegt nun darin, dass eine Verankerungseinheit an der Montageeinheit angeordnet ist, mit welcher die Montageeinheit mit einem in Fahrtrichtung vor der Montageeinheit sich befindenden Sitz verbindbar ist, sodass die Montageeinheit bei an dem davor liegenden Sitz angeordneter Verankerungseinheit über die Verankerungseinheit Zugkräfte ableiten kann.

Durch diese Maßnahme ist es z. B. möglich, die Vorrichtung an einer Sitzbank anzuordnen, die längs zur Fahrtrichtung ausgerichtet ist, wobei Gurtkräfte über die Verankerungseinheit abgeleitet werden, wenn diese an einem in Fahrtrichtung vor der Längssitzbank sich befindenden, z. B. Beifahrersitz, montiert ist. Die Montageeinheit ist auf z. B. der Längssitzbank dann so angeordnet, dass eine Person, mit dem Rücken zur Fahrtrichtung sitzt und z. B. an einem Beckengurt in dieser Sitzposition angeschnallt ist. Durch diese Maßnahme lässt sich somit ein Längssitz dennoch als Sitz für eine Fahrt nutzen, für welche grundsätzlich Längssitze nicht zugelassen sind.

Vorzugsweise umfasst die Montageeinheit eine Quertraverse, dievorzugsweise quer an einem Längssitz, also quer zur Fahrtrichtung angeordnet wird und die z. B, in ihren Endbereichen mit einem Beckengurt mit Gurtschloss ausgestattet ist. Die Montageeinheit umfasst auf einer Unterseite vorzugsweise Befestigungsmittel zur Verankerung der Montageeinheit an einem Unterbau, z. B. Sitzkasten einer Längssitzbank. Damit ist es möglich, der Montageeinheit zunächst eine Grundbefestigungskraft zur Verfügung zu stellen, wobei Hauptzugkräfte durch die Verankerungseinheit zu einem davor liegenden Sitz aufgefangen werden.

In einer besonders bevorzugten Ausgestaltung der Erfindung ist die Montageeinheit steckbar. Damit wird es möglich, einen zusätzlichen Sitz für die Fahrt nur zeitweise, wenn er notwendig ist, einzurichten. In diesem Zusammenhang ist es überdies vorteilhaft, wenn die Montageeinheit eine Rückenlehnenstützkonstruktion, z. B. einen Rohrrahmen umfasst.

Ein Rohrrahmen kann z. B. an einer Quertraverse der Montageeinheit angebracht sein, wobei von einem zu einer Sitzfläche zeigenden Abschnitt der Quertraverse Einsteckelemente vorstehen, die z. B. in passende Aufnahmen am Unterbau passen, sodass die ganze Einheit leicht ein- und ausgesteckt werden kann. Damit sich auch die verankerungseinheit einfach montieren und demontieren lässt, wird im Weiteren vorgeschlagen, dass an der Montageeinheit ein Kupplungsstück, z. B. ein Gurtschloss für die Ankopplung eines Zugmittels der Verankerungsmittel angebracht ist. Das Kupplungsstück ist dann vorzugsweise passend zu einem Gurtendstück, beispielsweise einer Steckzunge. Die Verankerungseinheit ist z. B. an einem davor liegenden Sitz im Seitenbereich verankert ist. Wird ein zusätzlicher Sitz für die Fahrt nicht gebraucht, kann die Montageeinheit zur Verstauung an geeigneter Stelle samt Rückenlehne ausgesteckt und über das Kupplungsstück von der verbleibenden Verankerungseinheit abgekoppelt werden. Die verbleibende Verankerungseinheit ist beispielsweise ein Gurtaufroller, auf den dann der Gurt aufrollbar ist, um ihn sachgemäß zu verstauen.

Zur Schaffung einer kompletten Sitzeinheit aus Rückenlehne und Sitzfläche wird außerdem vorgeschlagen, dass an der Montageeinheit ein Scharnier für die Anbringung einer klappbaren Sitzfläche angeordnet ist, vorzugsweise mit Sitzfläche.

An einer solchen Montageeinheit ist vorzugsweise dann ein Beckengurt vorgesehen. Die Sitzposition ist entgegen der Fahrtrichtung. Für eine schnelle Befestigung der Montageeinheit mit Einsteckelementen ist es darüber hinaus vorteilhaft, wenn in einem Unterbau, z. B. einem Sitzkasten Einschubelemente zur festen Montage am Unterbau vorhanden sind, in welche Einsteckabschnitt der Montageeinheit passen.

Dadurch kann, obgleich der einfachen Ein- und Aussteckbarkeit der Montageeinheit, eine solide Befestigung zur Verfügung gestellt werden, die z. B. Kräfte auf die Montageeinheit in Fahrtrichtung aufnehmen kann.

### Beschreibung der Ausführungsbeispiele:

Mehrere Ausführungsbeispiele sind in den Zeichnungen dargestellt und werden unter Angabe weiterer Vorteile und Einzelheiten nachstehend näher erläutert. Es zeigen;
- Fig. 1: in einer perspektivischen schematischen Darstellung eine Sitzanordnung mit einer erfindungsgemäßen Vorrichtung zur Anbringung eines Sicherheitsgurtes,
- Fig. 2: eine zur Fig. 1 vergleichbare perspektivische Darstellung, die den Zusammenbau der Sitzanordnung verdeutlicht und
- Fig. 3: in einer perspektivischen Explosiorsdarstellung Bestandteile einer erfindungsgemäßen Vorrichtung zur Anbringung eines Sicherheitsgurtes.

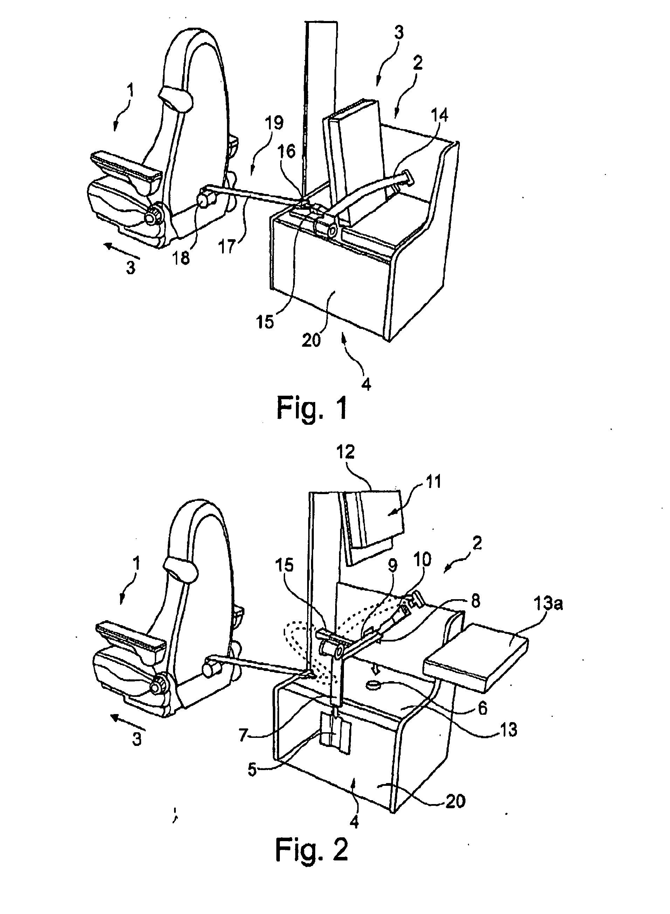

In den Fig. 1 und 2 ist ein Beifahrersitz 1 gezeigt, hinter dem in Fahrtrichtung 3 sich eine Längssitzbank 2 befindet. Der Beifahrersitz 1 und die Längssitzbank 2 sind z. B. in einem Wohnmobil eingebaut. Die Längssitzbank 2 kann bei stehendem Fahrzeug als Sitzmöglichkeit genutzt werden. Eine Sitzgelegenheit zum Fahren muss jedoch entweder in oder gegen die Fahrtrichtung ausgerichtet sein. Damit die Längssitzbank 2 als Sitzgelegenheit für einen Fahrbetrieb zur Verfügung steht, ist sie mit einer Sitzvorrichtung 3 ausgestattet, wodurch die Längssitzbank 2 als Sitz entgegen der Fahrtrichtung 3 nutzbar ist.

Zur Anbringung der Sitzvorrichtung 3 ist ein Unterbau 4 der Längssitzbank 2 mit Aufnahmeelementen 5, 6 ausgestattet. Das Aufnahmeelement 6 ist an einem Sitzboden 13 angebracht, wogegen das Aufnahmeelement 5 an eine Seitenwand 20 des Unterbaus 4 angebaut ist. In die Aufnahmeelemente 5, 6 lässt sich mittels Einsteckelementen 7, 8 eine Montageeinheit 9 mit Beckengurt 10 und Rückenlehne 11 einstecken. Die Rückenlehne 11 ist z. B. mit einem Rückenpolster 12 ausgestattet. Zusätzlich ist der Sitzboden 13 mit einer Sitzauflage 13a versehen. An der Montageeinheit 9 ist ein Beckengurt 14 befestigt. Damit ist die Sitzvorrichtung 3 zum Sitzen entgegen der Fahrtrichtung komplettiert. Zur Aufnahme von Kräften entgegen der Fahrtrichtung 3 ist an der Montageeinheit 9 ein Gurtschloss 15 auf der abgewandten Seite der Rückenlehne ungefähr mittig montiert. In das Gurtschloss 9 kann ein passendes Gegenstück eingeklickt werden kann, das das Ende eines Gurtes 17 bildet, der über einen Gurtaufroller 18 am Beifahrersitz 1 in dessen Rückenbereich montiert ist.

Der Gurtaufroller 18 mit Gurt 17, Gegenstück 16 sowie Gurtschloss 15, das an der Montageeinheit 9 befestigt ist, bilden eine Verankerungseinheit 19, die in der Lage ist, Zugkräfte aufzunehmen, die über den Beckengurt 14 in die Montageeinheit 9 eingeleitet werden. Grundsätzlich denkbar ist auch eine im Wesentlichen steife Verankerungseinheit.

Erst durch die Verankerungseinheit 19 ist die Setzvorrichtung 3 so ausgestattet, dass gesetzliche Stabilitätsvorrichtungen erfüllt sind. Alleine die Anbringung am Unterbau 4 der Längssitzbank 2 könnte die erforderlichen Kräfte nicht bereitstellen.

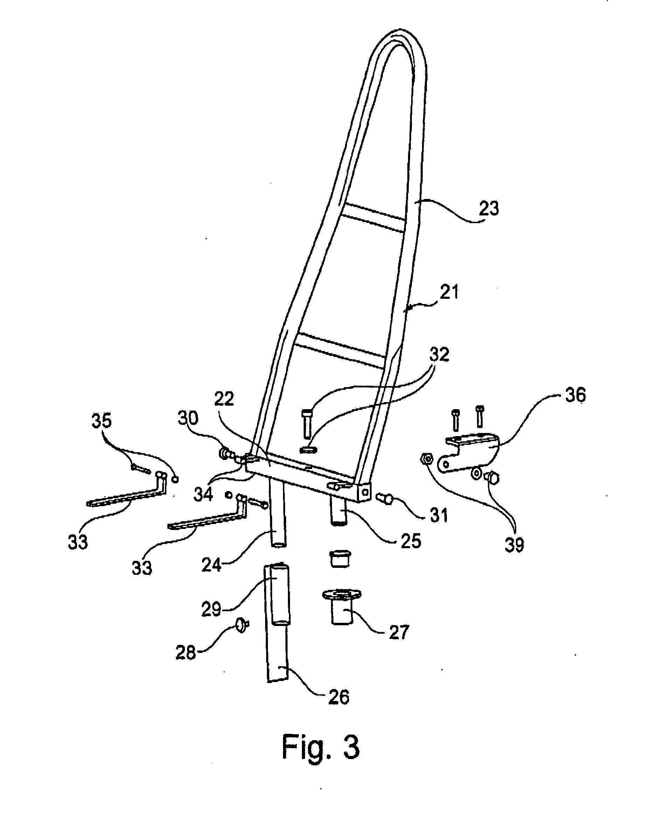

Fig. 3 zeigt Teile zum Aufbau einer erfindungsgemäßen Sitzanordnung. Zentraler Bestandteil ist eine Montageeinheit 21. Die Montageeinheit 21 besteht aus einer Quertraverse 22 und einem daran angeordneten Rohrrahmen 23, der den Unterbau für eine Rückenlehne bildet. An der Quertraverse sind zwei Einsteckelemente 24, 25 für dazu passende Aufnahmeelemente 26, 27 vorgesehen. Die Aufnahmeelemente 26, 27 werden an einem Unterbau z. B, eines Längssitzes angebracht, beispielsweise so wie in den Fig. 1 und 2 an einem Sitzboden 13 bzw. einer Seitenwand 20. Zur Arretierung einer einmal eingesteckten Montageeinheit ist eine Fixierschraube 28 vorgesehen, die in ein Aufnahmerohr 29 der Aufnahmeeinheit 26 eingeschraubt werden kann, sobald das Einsteckteil 24 darin eingeschoben und positioniert ist.

Im Weiteren umfasst die Quertraverse 22 Befestigungsschrauben 30, 31 zur Anordnung von Teilen eines Gurtes, z. B. Beckengurtes 14, die mit Stirnseiten der Quertraverse 22 verschraubt werden.

Ein Kupplungsstück für eine Verankerungseinheit ist an der Quertraverse 22 über Schraubmittel 32 anbringbar. Zur Montage einer Sitzfläche an der Montageeinheit 21 sind Scharnierteile 33, 34 vorgesehen, die über Scharnierbolzen 35 zueinander anlenkbar sind. Auf der langen L-Seite des Scharnierteils 33 kann z. B. eine Sitzfläche aufgeschraubt werden.

In Fig. 3 ebenfalls dargestellt ist ein Montagewinkel 36, der z. B. an der rechten Außenseite eines Beifahrersitzes über Schrauben 37, 38 anbringbar ist, um über weitere Schraubenmittel 39 einen Gurt, z. B. einen Gurtaufroller mit Gurt zu montieren, der dann an ein an die Quertraverse 22 angeschraubtes Kupplungsstück anbindbar ist.

### Bezugszeichenliste:

- 1: Beifahrersitz
- 2: Längssitzbank
- 3: Sitzvorrichtung
- 4: Unterbau
- 5: Aufnahmeelement
- 6: Aufnahmeelement
- 7: Einsatzelement
- 8: Einsatzelement
- 9: Montageeinheit
- 10: Montageeinheit
- 11: Rückenlehne
- 12: Rückenpolster
- 13: Sitzboden
- 13a: Sitzauflage
- 14: Beckengurt
- 15: Gurtschloss
- 16: Gegenstück
- 17: Gurt
- 18: Gurtaufroller
- 19: Verankerungseinheit
- 20: Seitenwand
- 21: Montageeinheit
- 22: Quertraverse
- 23: Rundrahmen
- 24: Einsteckteil
- 25: Einsteckteil
- 26: Aufnahmeelement
- 27: Aufnahmeelement
- 28: Fixierschraube
- 29: Hülse
- 30: Schraube
- 31: Schraube
- 32: Schraubmittel
- 33: Scharnierteil
- 34: Scharnierteil
- 35: Scharnierbolzen
- 36: Montagewinkel
- 37: Schraube
- 38: Schraube
- 39: Schraubenmittel

## Patentansprüche

1. Vorrichtung zur Anbringung eines Sicherheitsgurtes (14) in einem Fahrzeug mit einer Montageeinheit (9, 21), die zur Befestigung eines Gurtschlosses und einer Gurtrolle ausgebildet ist, **dadurch gekennzeichnet, dass** eine Verankerungseinheit (19) an der Montageeinheit (9, 21) angeordnet ist, mit welcher die Montageeinheit (9, 21) mit einem in Fahrtrichtung (3) vor der Montageeinheit (9, 21) sich befindenden Sitz (1) verbindbar ist, sodass die Montageeinheit (9, 21) bei an dem davor sich befindenden Sitz (1) angeordneter Verankerungseinheit (19) über die Verankerungseinheit (19) Zugkräfte ableiten kann.

2. Vorrichtung nach Anspruch 1, **dadurch gekennzeichnet, dass** die Montageeinheit (9, 21) eine Quertraverse (22) umfasst.

3. Vorrichtung nach einem der vorhergehenden Ansprüche, **dadurch gekennzeichnet, dass** die Montageeinheit (9, 21) mit Befestigungsmitteln (7, 8, 24, 25) zur Verankerung an einem Unterbau (4) ausgestattet ist.

4. Vorrichtung nach einem der vorhergehenden Ansprüche, **dadurch gekennzeichnet, dass** die Montageeinheit (9, 21) steckbar ist.

5. Vorrichtung nach einem der vorhergehenden Ansprüche, **dadurch gekennzeichnet, dass** die Montageeinheit (9, 21) eine Rückenlehnenkonstruktion (23) umfasst.

6. Vorrichtung nach einem der vorhergehenden Ansprüche, **dadurch gekennzeichnet, dass** an der Montageeinheit (9, 21) ein Kupplungsstück (15) für die Ankupplung eines Zugmittels (17) der Verankerungseinheit (19) angebracht ist.

7. Vorrichtung nach einem der vorhergehenden Ansprüche, **dadurch gekennzeichnet, dass** die Verankerungseinheit (19) einen Gurt (17) und eine Gurtrolle (18) umfasst.

8. Vorrichtung nach einem der vorhergehenden Ansprüche, **dadurch gekennzeichnet, dass** an der Montageeinheit ein Scharnier (33, 34, 35) für die Anbringung einer klappbaren Sitzfläche angeordnet ist.

9. Vorrichtung nach einem der vorhergehenden Ansprüche, **dadurch gekennzeichnet, dass** die Montageeinheit einen Beckengurt (14) umfasst.

10. Vorrichtung nach einem der vorhergehenden Ansprüche, **dadurch gekennzeichnet, dass** die Befestigungsmittel zur Verankerung an einem Unterbau (4) Einschubelemente (5, 6, 26, 27) zur festen Montage an einem Unterbau (4) umfassen.

11. Sitzanordnung mit einer Sitzbank (2) und einem in Fahrtrichtung vor der Sitzbank angeordneten Sitz (1), an welcher eine Vorrichtung nach einem der vorhergehenden Ansprüche zwischen der Sitzbank (2) und dem Sitz (1) montiert ist.

## Claims

1. Device for attaching a safety belt (14) in a vehicle comprising an assembly unit (9, 21) which is designed for securing a belt lock and a belt roller, **characterised in that** an anchoring unit (19) is arranged on the assembly unit (9, 21) by means of which the assembly unit (9, 21) can be connected to a seat (1) located in front of the assembly unit (9, 21) in travelling direction (3), so that the assembly unit (9, 21) with an anchoring unit (19) arranged on the seat (1) in front can transfer traction forces via the anchoring unit (19).

2. Device according to claim 1, **characterised in that** the assembly unit (9, 21) comprises a cross member (22).

3. Device according to one of the preceding claims, **characterised in that** the assembly unit (9, 21) is equipped with securing means (7, 8, 24, 25) for anchoring onto a base (4).

4. Device according to one of the preceding claims, **characterised in that** the assembly unit (9, 21) can be plugged in.

5. Device according to one of the preceding claims, **characterised in that** the assembly unit (9, 21) comprises a backrest construction (23).

6. Device according to one of the preceding claims, **characterised in that** a coupling piece (15) is attached onto the assembly unit (9, 21) for connecting a traction means (17) of the anchoring unit (19).

7. Device according to one of the preceding claims, **characterised in that** the anchoring unit (19) comprises a belt (17) and a belt roller (18).

8. Device according to one of the preceding claims, **characterised in that** a hinge (33, 34, 35) is arranged on the assembly unit for the attachment of a foldable seat.

9. Device according to one of the preceding claims, **characterised in that** the assembly unit comprises a lap belt (14).

10. Device according to one of the preceding claims, **characterised in that** the securing means for anchoring to a base (4) comprise insertion elements (5, 6, 26, 27) for fixing to a base (4).

11. Seat assembly comprising a bench (2) and a seat (1) arranged in front of the bench in travelling direction, on which a device according to one of the preceding claims is mounted between the bench (2) and the seat (1).

## Revendications

1. Dispositif de mise en place d'une ceinture de sécurité (14) dans un véhicule, pourvu d'une unité de montage (9, 21), qui est conçue pour fixer une boucle de ceinture et un enrouleur de ceinture, **caractérisé en ce qu'**une unité d'ancrage (19) est disposée sur ou dans l'unité de montage (9, 21) et permet de relier l'unité de montage (9, 21) à un siège (1) situé devant l'unité de montage (9, 21) dans le sens de marche (3), de telle manière que l'unité de montage (9, 21) peut évacuer les forces de traction par l'intermédiaire de l'unité d'ancrage (19) lorsque l'unité d'ancrage (19) est disposée sur le siège (1) situé devant.

2. Dispositif selon la revendication 1, **caractérisé en ce que** l'unité de montage (9, 21) comprend une traverse (22).

3. Dispositif selon l'une des revendications précédentes, **caractérisé en ce que** l'unité de montage (9, 21) est équipée de moyens de fixation (7, 8, 24, 25) lui permettant d'être ancrée à un châssis (4).

4. Dispositif selon l'une des revendications précédentes, **caractérisé en ce que** l'unité de montage (9, 21) peut être emboîtée.

5. Dispositif selon l'une des revendications précédentes, **caractérisé en ce que** l'unité de montage (9, 21) comprend une construction pour dossier (23).

6. Dispositif selon l'une des revendications précédentes, **caractérisé en ce qu'**une pièce d'accouplement (15) destinée à l'accouplement d'un moyen de traction (17) de l'unité d'ancrage (19) est disposée sur l'unité de montage (9, 21).

7. Dispositif selon l'une des revendications précédentes, **caractérisé en ce que** l'unité d'ancrage (19) comprend une ceinture (17) et un enrouleur de ceinture (18).

8. Dispositif selon l'une des revendications précédentes, **caractérisé en ce qu'**une charnière (33, 34, 35) est disposée sur l'unité de montage pour le montage d'une surface d'assise rabattable.

9. Dispositif selon l'une des revendications précédentes, **caractérisé en ce que** l'unité de montage comprend une ceinture sous-abdominale (14).

10. Dispositif selon l'une des revendications précédentes, **caractérisé en ce que** les moyens de fixation pour l'encrage sur une infrastructure (4) comprennent des éléments d'insertion (5, 6, 26, 27) permettant un montage solide sur une Infrastructure (4).

11. Ensemble d'assise pourvu d'une banquette (2) et d'un siège (1) disposé devant la banquette dans le sens de marche, banquette sur laquelle est monté un dispositif selon l'une des revendications précédentes entre la banquette (2) et la siège (1).
